**Europäisches Patentamt**

**European Patent Office**

**Office européen des brevets**

(19)

(11) Publication number : **0 381 869 B1**

# (12) EUROPEAN PATENT SPECIFICATION

(45) Date of publication of patent specification :
**30.12.92 Bulletin 92/53**

(51) Int. Cl.[5] : **B64G 1/00**

(21) Application number : **89200281.7**

(22) Date of filing : **07.02.89**

(54) **Method for launching a secondary payload.**

(43) Date of publication of application :
**16.08.90 Bulletin 90/33**

(45) Publication of the grant of the patent :
**30.12.92 Bulletin 92/53**

(84) Designated Contracting States :
**DE ES FR IT NL**

(56) References cited :
**JOURNAL OF THE INSTITUTION OF ELEC-
TRONIC AND RADIO ENGINEERS, vol. 57, no.
5 (supplement), September/October 1987,
pagesS99-S115, IERE; M.N. SWEETIG: "The
university of Surrey UoSAT-2 spacecraft mis-
sion"
NEC RESEARCH & DEVELOPMENT, no. 85,
April 1987, pages 106-110, Tokyo, JP; F.
YAMASHITA et al.: "Japan's firstamateur-
radio satellite; JAS-1"**

(56) References cited :
**THE RADIO AND ELECTRONIC ENGINEER,
vol. 52, no. 8/9, August/September 1982, pages
363-378, pages 363-378, Institution ofElec-
tronic and Radio Engineers; M.N. SWEETING:
"UOSAT - An investigation into cost-effective
spacecraft engineering"**

(73) Proprietor : **FOKKER SPACE & SYSTEMS B.V.
Hoogoorddreef 5
NL-1101 BA Amsterdam (NL)**

(72) Inventor : **Sudmeijer, Kees Jan
Alkstraat 6
NL-2623 RC Delft (NL)**
Inventor : **Wegereef, Jan Willem
Margrietlaan 36
NL-6713 PM Ede (NL)**

(74) Representative : **de Bruijn, Leendert C. et al
Nederlandsch Octrooibureau
Scheveningseweg 82 P.O. Box 29720
NL-2502 LS Den Haag (NL)**

## Description

The invention relates to a method for launching one or more secondary payloads from a multi stage launcher carrying a primary payload on top of the last stage by arranging said secondary payload(s) in an otherwise unused space inside the envelope of the launcher in such a manner that apart from the weight of the secondary payload(s) the mission of the launcher is not affected, and by ejecting the secondary payload(s) into space at a moment during the flight of the launcher at which the secondary payload(s) is (are) not surrounded by the envelope anymore.

A method of this type is described in the article "The University of Surrey UoSAT-2 spacecraft mission" by M.N. Sweeting in Journal of the Institution of Electronic and Radio Engineers, vol 57, no 5 (supplement), september/october 1987, pages S99-S115. The secondary payload, formed by the UoSAT-2 spacecraft contained an own propulsion unit and was mounted near the top of the last stage of the launcher at short distance underneath the primary payload within an otherwise unused space inside the faring of the launcher.

In aerodynamic design of modern aeroplanes a variety of design tools are available such as Computational Fluid Dynamic codes (CFD), windtunnel facilities and aerodynamic databases. In the hands of experienced designers these tools guarantee accurate predictions of aircraft performance and as a result there is a good confidence in aerodynamic design. A more complicated situation arises at hypersonic velocities as they are experienced during re-entry of a spaceplane. Extremely high temperatures of the gas and dissociation of oxygen and nitrogen molecules with catalytic recombination at the skin of spaceplane, resulting in high heat rates, is an important feature of hypersonic flow.

Extensive analytical and experimental research has been undertaken to study these flow phenomena to solve problems of hypersonics. Problems are studied in aerodynamic and aerothermal hypersonic windtunnels. (ref "Aerodynamics of Hypersonic Lifting Vehicles", AGARD-CP-428, April 1987). The role of experiments in the development of CFD has been receiving considerable attention in recent years. (ref "Windtunnels for CFD, code verification", AIAA Paper 86-0752, March 1986). However, basic and applied research have shown that experimental measurements with much more quality in the details are needed in order to build up a fundamental understanding of the physics of hypersonics, leading to computational methods by which realistic design information can be calculated. Flight tests with re-entry vehicles and ground experiments with windtunnels are extraordinarily expensive, which can be a constraint to make essential progress in hypersonic technology.

In comparison with the seventies there is a decline in the eighties in the number of active hypersonic tunnels. Although a significant capability for verifying CFD codes is still in existence, an improved capability will be necessary to solve the above described situation.

An alternative for windtunnels tests is the launch of a re-entry sensor vehicle by a small rocket with one or more stages. After the last stage of the rocket has carried the sensor vehicle to a prescribed altitude and airspeed, the vehicle is separated from the rocket. During the following ballistic trajectory from the exo-atmosphere to the bottom of the atmosphere, a pre-programmed scan pattern is executed. The re-entry velocity should be high enough to produce Real Gas Effects and heat rates comparable to a re-entry from a low earth orbit (LEO). After the re-entry the vehicle is landing on the earth by parachute and recovered.

Sounding rockets are versatile tools for scientists studying that region of the atmosphere above balloon altitudes but below orbital satellite altitudes. (ref AIAA 6th Sounding Rocket Conference, CP-828, October 1982). An advantage of the method is that the transportable equipment allows launch operations at remote sites away from established launch ranges. A draw back are the high costs of a program consisting of a sufficient number of experiments.

Another alternative for windtunnel tests is flying of the sensor vehicle as a piggy back in a launcher for satellites, resulting in insertion in geostationary transfer orbit (GTO). This solution is complicated because of the de-orbit manoeuvre for insertion into a trajectory orbit that leads to an atmospheric re-entry. The main complications are that a de-orbit propulsion system is needed capable to slow down the vehicle to about 1000 m/sec. An attitude control system is needed to ensure the correct direction of the slow down force. Ground stations for tracking and command are needed.

Yet another alternative for the windtunnel tests is the application of the Get Away Special facility (GAS) of NASA's Space Shuttle Transportation System (STS) for small scientific payloads. The GAS carrier system is a low cost ride on the STS. The GAS as developed consists of canisters installed in the STS payload bag. The GAS is totally self contained within the canister: it carries its own power source, data recording and thermal control system. However, the extra vehicle activities of the GAS are restricted because of safety criteria of the STS. A de-orbit propulsion unit would be needed. Even when NASA should except such a payload, the test vehicle would need also an attitude control system. Furthermore ground stations for tracking and command are needed.

It will be clear from the above described prior art analysis that there still exists a need for a method to launch a re-entry vehicle in a ballistic orbit in order to carry out low cost experiments, especially in the field of hypersonics. Such a re-entry vehicle must be unmanned and is not essentially equipped with a propulsion system or an attitude control system or guidance and control during re-entry.

In agreement with this object the invention now provides a method of the type indicated in the first paragraph which is characterized in that the secondary payload(s) is (are) mounted on or in a stage not carrying the primary payload and that the secondary payload(s) is (are) ejected after separation of said stage from the rest of the launcher in order for the secondary payload(s) to follow a ballistic trajectory.

To avoid any affection of the main mission of the launcher even in case the hold down mechanism of the vehicle or vehicles has failed for any reason preferably each secondary payload is at least partly surrounded by means preventing in a first condition any substantial movement of the respective secondary payload unless a specially destined section of said means is brought into a second operative condition. During normal operation said specially destined section is brought into said second operative condition after the separation between the neat stage of the launcher and the stage comprising the secondary payload(s) is completed, but before controlling the ejection means of the payload(s).

The invention will now be explained in more detail with reference to the attached drawings.

Figure 1 shows an example of a three stage launcher of satellites with a test vehicle for low cost experiments placed in the encircled intersection between the second and third stage.

Figure 2 is a simplified pictorial view of an embodiment of the test vehicle is placed in a containment to protect the module during all phases and to transfer loads to the interstate structure.

Figure 3 provides more detailed information about the mounting of the vehicle inside the construction between two stages of the launcher of figure 1, which construction is connected to the second stage of the launcher.

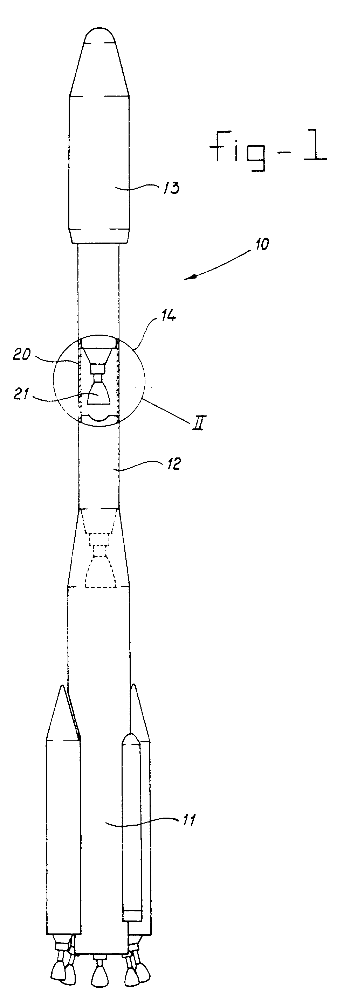

An example of a three stage launcher of satellites capable of carrying a test vehicle in agreement with the invention is illustrated in figure 1.

The three stage launcher for satellites, illustrated schematically in figure 1, is in fact the Ariane IV launcher. For more detailed information about the Ariane IV launcher reference is made to the large amount of publicly available literature. The launcher, indicated as a whole by reference number 10 in figure 1, comprises three stages, the booster stage 11, the intermediate stage 12 and the top stage 13 carrying the payload.

It is recognized by the inventors that there are non-used empty spaces within the assembled launcher, not usable for any payload which has to be transported into an orbit, but available for instance for a test vehicle which has to be brought into a ballistic orbit.

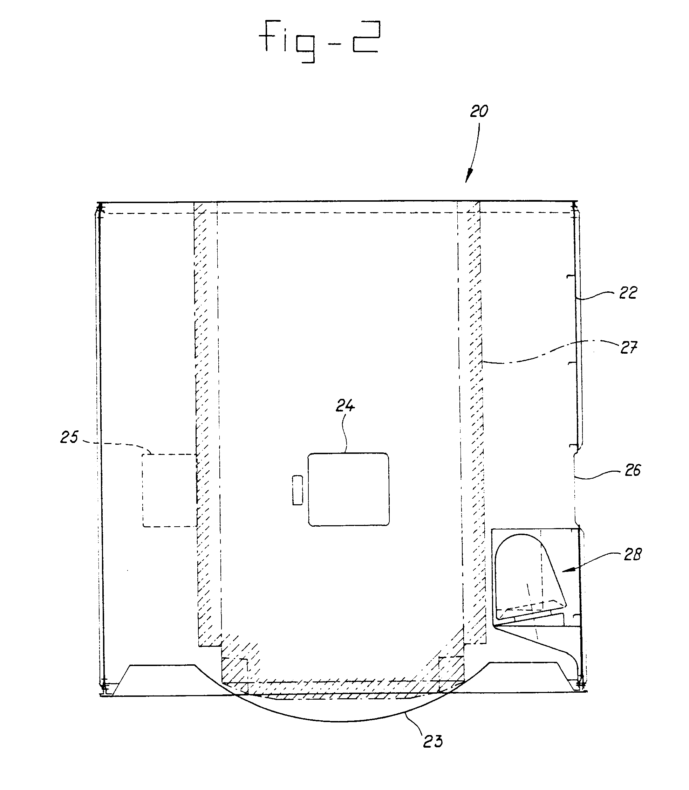

Such spaces are for instance present at the top of the second stage especially within the cylindrical segment connecting the second intermediate stage to the third top stage. This cylindrical segment is in figure 1 indicated within the circle and illustrated in figure 2 separately on a larger scale. This cylindrical section 20 normally covers and encloses the exhaust nozzle of the propulsion mechanism of the third top stage of the launcher. This exhaust nozzle 21 has a significantly smaller diameter than the diameter of the cylindrical section 20 so that there is space available within the section 20 which can be used for mounting objects such that the separation procedure between the second and third stage and the proper functioning of the nozzle 21 is not interfered.

Figure 2 provides a more detailed illustration of the cylindrical section 20. The cylindrical section consists essentially of a cylindrical wall 22, closed at the bottom by a coverplate 23 which covers and protects the contents (the propulsion mechanism) of the second stage during the flight. The topside of the cylindrical segment 20 is open. The wall 22 comprises a number of hatches destined for inspection of the inside of the segment, especially when the segment is assembled together with the second and third stage of the launcher. One of these hatches is indicated by 24 and two others are indicated by 25 and 26, whereby hatch 25 is shown in dotted lines.

In figure 2 the volume taken by the nozzle 21 is indicated by the shadowed dotted line 27. It is clear from figure 2, that only the central part of the inside volume of the segment 20 is necessary for receiving the exhaust nozzle 21 of the propulsion mechanism of the top stage, the whole volume between the wall 22 and the imaginary cylinder 27 is in fact available for any other purpose as long as the normal behaviour of the launcher is not disturbed.

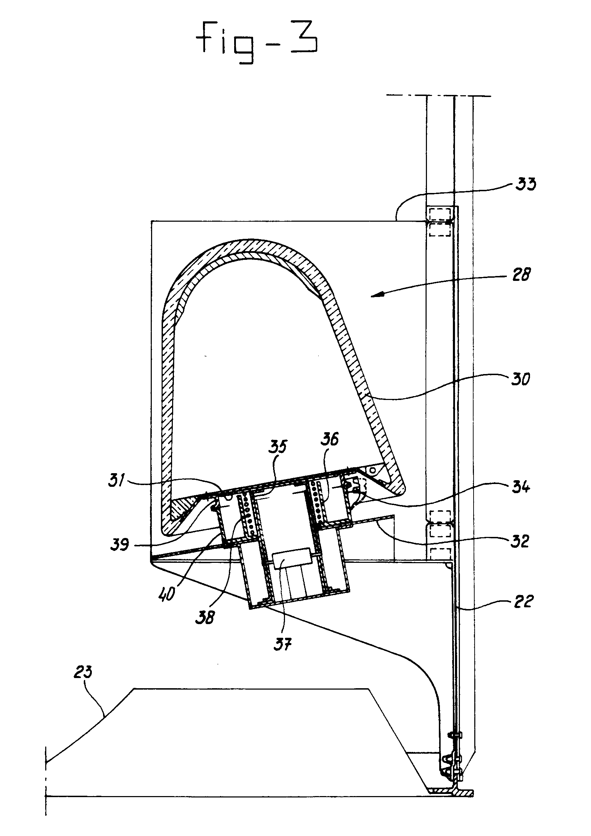

In agreement with the invention this free volume is used for launching one or more test vehicles which, together with the second stage will travel upwards into the exo-atmosphere. After separating the third stage from the second stage, igniting the propulsion mechanism of the third stage and waiting during a delay period, necessary to assure that there is some safety distance between the second and third stage, the mechanisms for ejecting the test vehicles can be actuated as will be described in more detail with reference to the following figures. In figure 2 one of such test vehicles is schematically indicated by 28. As is illustrated in figure 2 this test vehicle neatly fits within the free volume inside the cylinder 22. The way in which this test vehicle 28 is mounted in said free volume will be explained in more detail with reference to figure 3.

The invention is more specificallly directed to launching hypersonic sensor vehicles in a ballistic orbit. The main goal of a hypersonic sensor vehicle related to the invention, is to gain valuable flight data concerning thermodynamic and aerodynamic loads during re-entry. Especially the requirements concerning the thermal environment during the re-entry will have an influence on the determination of for example the bow radius of the vehicle in order to duplicate Real Gas Effects, Reynold number and Mach number. It is obvious that requirements like these will influence the aerodynamic design of the sensor vehicle. Because it is not an objective of the invention to outline a re-entry vehicle that is an optimum configuration for the circumstances during the mission, only one configuration is shown in figure 3 as an example. However, a large variation of re-entry vehicle geometries can be considered. The dimensions of the vehicle depend on the existing space in the interstage left by the nozzle 21 of the top stage 13 of the launcher 10, while the maximum allowable mass of the vehicle or vehicles depends on the payload reserve of the launcher 10.

Figure 3 in fact provides more detailed information about a small section of figure 2, illustrated on a more larger scale. Visible in figure 3 are parts of the wall 22 and the separation shield 23.

The vehicle 28 in figure 3 comprises an outer wall 30 closed at the backside by a cover wall 31. The volume enclosed by the outer wall 30 and the cover wall 31 is used for housing various apparatusses and instruments. The vehicle 28 comprises first of all the instruments and apparatusses necessary to carry out measurements during the re-entry of the vehicle in the atmosphere and to collect data therefrom. Furthermore the vehicle comprises a parachute system capable of releasing a parachute near the end of the re-entry trajectory to slow down the vehicle speed and to provide proper conditions for landing. The vehicle comprises also a location system in the form of a radio beacon, radar transponder and/or visual devices by means of which it will be possible to locate the vehicle after landing. All these devices are not illustrated in figure 3, because they are not relevant in relation to the invention and would only make the figure rather confusing.

As is illustrated the vehicle 28 is mounted on a sloped ejection table 32 located within an enclosure 33. The enclosure 33 can be embodied as kind of cocon, a cage or a number of brackets preventing that the vehicle 30 leaves the volume within the enclosure 33 even in case the clamping elements, which hold down the vehicle, will fail for one reason or another.

The cover wall 31 comprises a rim section 39 positioned against a outstanding rim 40 fixed to the sloped ejection table 32 such that both rims can be clamped together simultaneously by a number of clamping elements, one of which with reference number 34 is illlustrated in figure 3. Furthermore a cylindrical tube section 35, mounted to the bottom wall 31 of the vehicle 30 is inserted into a cylindrical tube section 36 mounted to the ejection table 32. Ih the free volume between both cylindrical tube sections a pretensioned helical spring 38 is located. The tube section 35 is fixed by means of a locking element 37. During the flight of the launcher the vehicle is locked to the sloped ejection table 32 on the one hand by the locking means 37 and on the other hand by the clamping means 34.

As soon as the launcher has obtained a predetermined altitude the second and third stage will become separated, the propulsion engine of the third stage will be activated and the third stage travels further until it reaches its predetermined orbit. As soon as there is a sufficient distance between the second stage and the third stage the vehicles, mounted in the second stage are free to be ejected. The ejection procedure of a vehicle 30 starts with opening the enclosure 33 in a suitable manner dependent on the actual embodiment of the enclosure. If the cage or cocon for instance comprises a movable lid or cover, this lid or cover will be brought into a position in which the ejection of the vehicle 30 will not be interfered with. Thereafter the ejection procedure continues with unlocking the clamps 34, whereafter the locking element 37 receives a command to unlock the cylindrical tube section 35. Under the influence of the tensioned helical spring 38 the vehicle will become accelerated and traverses the interstage in a short period of time.

In case more than one vehicle has to be ejected it will be clear that the ejection procedure of each of the vehicles has to be carried out with such a mutual timing relation that the ejection of one vehicle is not interfered by the ejection of another vehicle.

The specific ejection means illustrated in figure 3 and described above are in fact completely known to the expert in this field and are not very relevant with respect to the invention. Any other suitable means to hold down the vehicle at its correct position upon the ejection table during the flight and to eject the vehicle at the proper time after the second and third stage are separated from each other can be used instead.

## Claims

1. Method for launching one or more secondary payloads (28) from a multi stage launcher (10) carrying a primary payload on top of the last stage (13) by arranging said secondary payload(s) (28) in an otherwise unused space inside the envelope of the launcher in such a manner that apart from the weight of the secondary payload(s) the mission of the launcher is not affected, and by ejecting the secondary payload(s) into space at a moment during the flight of the launcher at which the secondary payload(s) is (are) not surrounded by the envelope anymore, characterized in that, the secondary payload(s) (28) is (are) mounted on or in a stage (12) not carrying the primary payload and that the secondary payload(s) is (are) ejected after separation of said stage (12) from the rest of the launcher in order for the secondary payload(s) to follow a ballistic trajectory.

2. Method according to claim 1, <u>characterized in that</u>, the each secondary payload (28) is at least partly surrounded by means (33) preventing in a first condition any substantial movement of the respective secondary payload unless a specially destined section of said means is brought into a second operative condition.

## Patentansprüche

1. Verfahren zum Starten von einer oder mehreren sekundäre Nutzlasten (28) von einer mehrstufigen Startvorrichtung (10), welche eine primäre Nutzlast am Oberteil der letzten Stufe (13) trägt, bei dem die sekundäre Nutzlast(en) (28) in einem ansonsten ungenutzten Raum im Inneren der Hülle der Startvorrichtung derart angeordnet wird, daß abgesehen von dem Gewicht der sekundären Nutzlast(en) die Durchführung der Aufgabe der Startvorrichtung nicht beeinflußt wird, und bei dem die sekundäre(n) Nutzlast(en) in den Weltraum zu einem Zeitpunkt während des Flugs der Startvorrichtung ausgestoßen wird, zu dem die sekundäre(n) Nutzlast(en) nicht mehr durch die Hülle umgeben ist (sind), **dadurch gekennzeichnet**, daß die sekundäre(n) Nutzlast(en) (28) auf oder in einer Stufe (12) angebracht ist (sind), welche nicht die primäre Nutzlast trägt, und daß die sekundäre(n) Nutzlast(en) nach der Trennung dieser Stufe (12) von dem Rest der Startvorrichtung ausgestoßen wird (werden), um zu erzielen, daß die sekundäre(n) Nutzlast(en) einer ballistischen Flugbahn folgt (folgen).

2. Verfahren nach Anspruch 1, **dadurch gekennzeichnet**, daß jede sekundäre Nutzlast (28) wenigstens teilweise von einer Einrichtung (33) umgeben ist, welche in einem ersten Zustand jegliche nennenswerte Bewegung der zugeordneten sekundären Nutzlast verhindert, bis ein speziell bestimmtes Teil der Einrichtung in einen zweiten Betriebszustand gebracht wird.

## Revendications

1. Procédé de lancement d'une ou de plusieurs charges utiles secondaires (28) à partir d'un lanceur (10) à étages multiples portant une charge utile principale au sommet du dernier étage (13) en disposant la ou lesdite(s) charge(s) utile(s) secondaire(s) (28) dans une chambre autrement inutilisée à l'intérieur de l'enveloppe du lanceur, de telle manière qu'à part le poids de la ou des charge(s) utile(s) secondaire(s), la mission du lanceur n'est pas affecté, et en éjectant la ou les charge(s) utiles(s) secondaire(s) dans l'espace à un moment durant le vol du lanceur auquel la ou les charge(s) utile(s) secondaire(s) n'est (ne sont) plus entourée(s) par l'enveloppe, caractérisé en ce que la ou les charge(s) utile(s) secondaire(s) (28) est (sont) montée(s) sur ou dans un étage (12) ne portant pas la charge utile principale, et en ce que la ou les charge(s) utile(s) secondaire(s) est (sont) éjectée(s) après séparation dudit étage (12) du reste du lanceur afin que la ou les charge(s) utile(s) secondaire(s) suive(nt) une trajectoire balistique.

2. Procédé selon la revendication 1, caractérisé en ce que chaque charge utile secondaire (28) est au moins partiellement entourée par des moyens (33) empêchant dans un premier état tout mouvement important de la charge utile secondaire respective sauf si une section destinée particulièrement desdits moyens est amenée dans un second état opératoire.

fig-1

# Fig-2

# Fig-3